# EUROPEAN PATENT APPLICATION

(11) **EP 2 461 556 A1**
(43) Date of publication of application: **06.06.2012**
(21) Application number: 09847733.4
(22) Date of filing: 15.12.2009
(51) Int. Cl.: H04M 3/42

(54) **METHOD, DEVICE AND SYSTEM FOR CALL BOOKING**

(30) Priority: 28.07.2009 CN 200910152078
(71) Applicant: ZTE Corporation, Shenzhen, Guangdong 518057 (CN)
(72) Inventor: MA, Junhui, Guangdong 518057 (CN); YANG, Mingwei, Guangdong 518057 (CN); WANG, Xiaodong, Guangdong 518057 (CN)
(74) Representative: Bongiovanni, Simone
(86) International application number: PCT/CN2009/075592
(87) International publication number: WO 2011/011947

(57) **Abstract**

The present invention discloses a method, an apparatus and a system for subscribing a call, wherein this method comprises: a SCF receiving an access request from a calling user through a SSP; the SCF performing with the called user the subscription interaction for the calling user and generating subscription call information; and the SCF prompting the subscription call information for the calling user. By the present invention, a simple and effective subscription call service can be realized.

## Description

### Field of the Invention

The present invention relates to the communication field, and in particular relates to a method, an apparatus and a system for subscribing a call.

### Background of the Invention

With the development of intelligent network technology and the popularization of intelligent network applications, some personalized requirements of a user can be achieved through the intelligent service without modifying the switch and terminal equipment in the present networks.

In real life, when the called user is inconvenient or does not want to accept an incoming call at some certain moments or certain occasions, the Do Not Disturb service can be used based on the current technology in the prior art.

The so-called Do Not Disturb service is as follows: the called user pre-starts the Do Not Disturb service and sets the Do Not Disturb information such as Do Not Disturb time, Do Not Disturb numbers, etc. When the calling user dials the called user, the calling user will hear the Do Not Disturb information, and the calling user can not communicate with the called user who has started the Do Not Disturb service, until the Do Not Disturb time expires.

The above method can achieve the Do Not Disturb function to a certain extent and can avoid the calling user from performing more than once invalid dial repeatedly. However, this Do Not Disturb service can be enabled by pre-starting and setting, so it cannot be adjusted correspondingly for the temporary calling user and cannot be executed flexibly. Simultaneously the calling user may forget the Do Not Disturb time and miss the call moment.

Accordingly, the Do Not Disturb service in the prior art must be made by pre-setting the number of the calling user, thus resulting in that the subscription of a call cannot be applied to any calling user.

### Summary of the Invention

The present invention, to solve the technical problem, is to provide a method, an apparatus and a system for subscribing a call to solve the problem that the subscription call service cannot be applied to any calling user.

In order to solve the above problem, a method for subscribing a call is provided by the present invention, which is applicable in the intelligent network and comprises: SCF receiving an access request from a calling user through a SSP; the SCF performing with the called user subscription interaction for the calling user and generating subscription call information; and the SCF prompting the subscription call information for the calling user

Preferably, after the SCF generating subscription call information, this method further comprises: the SCF registering the subscription call information in a Data Storage Module (SDF), wherein the subscription call information includes: identification information of the calling user, identification information of the called user, subscription call time, and subscription identifier; and after the SCF prompting the subscription call information for the calling user, the method further comprises: the SCF releasing a connection with the calling user.

Preferably, this method further comprises: a subscription alert server detecting the subscription call information periodically, and the subscription alert server prompting the calling user equipment through a short message gateway or the SCF, when the set time is up.

Preferably, the SCF performs the subscription interaction with the called user in at least one of the following manners: a voice subscription interaction manner and a subscription interaction manner of Unstructured Supplementary Service Data (USSD).

The present invention further provides an apparatus for subscribing a call, which is provided in a SCF and comprises: a service access module, configured to receive an access request from a calling user through a SSP; and an interaction module, configured to perform with the called user the subscription interaction for the calling user, to generate subscription call information and to prompt the subscription call information for the calling user.

Preferably, the interaction module at least comprises one of the following units: a voice interaction unit, configured to provide a voice interaction interface for the called user, to play a voice menu for the called user and to receive a key selection from the called user; and a USSD interaction unit, configured to provide a UUSD interaction interface for the called user, to transmit a USSD menu to the called user and to receive a key selection from the called user.

Preferably, the interaction module is configured to register the subscription call information in a Data Storage Module (SDF), wherein the subscription call information includes: the identification information of the calling user, identification information of the called user, subscription call time, and subscription identifier.

Preferably, this apparatus further comprises: a call control module, configured to release the connection with the calling user after the interaction module prompting the subscription call information for the calling user, to provide interface invoking service for a subscription alert server and to prompting the subscription call information for the calling user in cooperation with the interaction module.

A system for subscribing a call is further provided by the present invention, which comprises: a SCF, configured to receive an access request from a calling user through a SSP, to perform with the called user the subscription interaction for the calling user, to generate subscription call information and to prompting the subscription call information for the calling user; a SDF, configured to store the subscription call information generated by the SCF; and a subscription alert server, configured to detect periodically the subscription call information stored by the SDF and to prompt the calling user by a short message gateway or the SCF, when the set time is up.

Preferably, the subscription alert server further comprises: a scanning engine, and one of an external-call interface and a short message interface, wherein the scanning engine is configured to monitor in real time the subscription call information stored by the SDF, and if the set time is up, then the scanning engine prompts the calling user by the external-call interface or the short message interface according to the system configuration; an external-call interface is configured to play the subscription call information for the calling user through the SCF; and a short message interface is configured to send the subscription call information to the calling user by a short message gateway.

Compared with the prior art, with the above technical solution according to the present invention, the simple and effective subscription call service is achieved by performing with the called user the subscription interaction for the calling user and generating subscription call information. The technical solution of the present invention is not limited by the application environment or the application time, so it can improve user's experience.

### Brief Description of the Drawings

The drawings illustrated here provide a further understanding of the present invention and form a part of the present application. The exemplary embodiments of the present invention and the description thereof are used to explain the present invention without unduly limiting the scope of the present invention. In the drawings:
Fig. 1 is a schematic diagram of an application scene according to the embodiments of the present invention;
Fig. 2 is a flowchart of a method for subscribing a call according to the embodiments of the present invention;
Fig. 3 is a flowchart of a preferred process solution of the method for subscribing a call according to the method embodiments of the present invention;
Fig. 4 is a schematic diagram of triggering manner of the called user according to the method embodiments of the present invention;
Fig. 5 is a schematic diagram of triggering manner of the calling user according to the method embodiments of the present invention;
Fig. 6 is a block diagram of the structure of an apparatus for subscribing a call according to the apparatus embodiments of the present invention;
Fig. 7 is a block diagram of a preferred structure of the apparatus for subscribing a call according to the apparatus embodiments of the present invention; and
Fig. 8 is a block diagram of the structure of a system for subscribing a call according to the system embodiments of the present invention.

### Detailed Description of the Embodiments

To making the objects, technical solutions and advantages of the present invention clearer, the present invention will be further described in detail hereinafter in conjunction with the drawings and embodiments.

The embodiments of the present invention can flexibly select the subscription time to communicate with the calling user by performing with the called user the subscription interaction for the calling user, generating subscription call information and prompting this subscription call information for the calling user, wherein the manner of subscription interaction may be a voice manner or an Unstructured Supplementary Service Data (USSD) manner, such that the calling user can not sense the scene environment which the called user is in, thus protecting the privacy of the called user. Moreover the embodiments of the present invention are applicable for multiple calling users, which improves user's experience.

It should be noted that the called user in the embodiment of the present invention needs to pre-register the subscription call service.

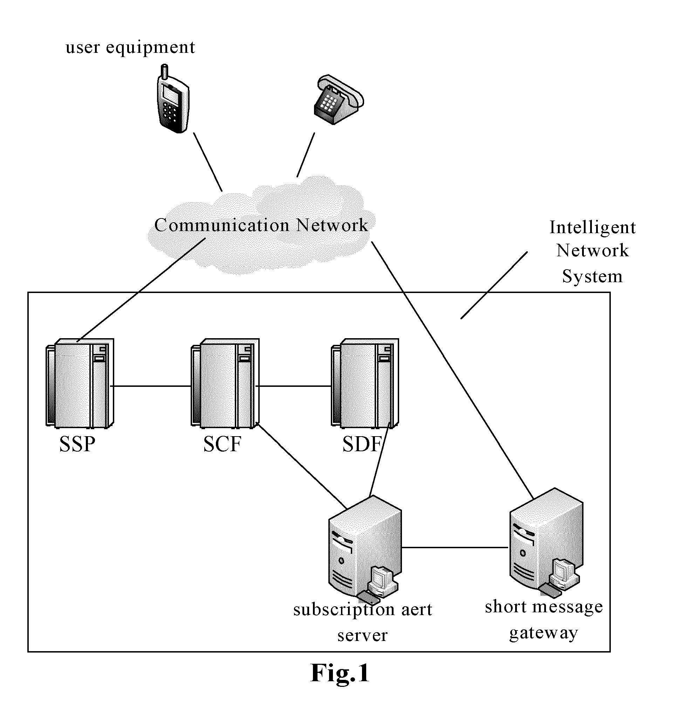

Fig. 1 is a schematic diagram of an application scene according to the embodiments of the present invention. The embodiments of the present invention are applicable for the intelligent network system. As shown in Fig. 1, it mainly comprises: a Signaling Switch Point (SSP), a Service Control Function (SCF), a Service Data Function (SDF), a subscription alert server and a short message gateway

### Method Embodiments

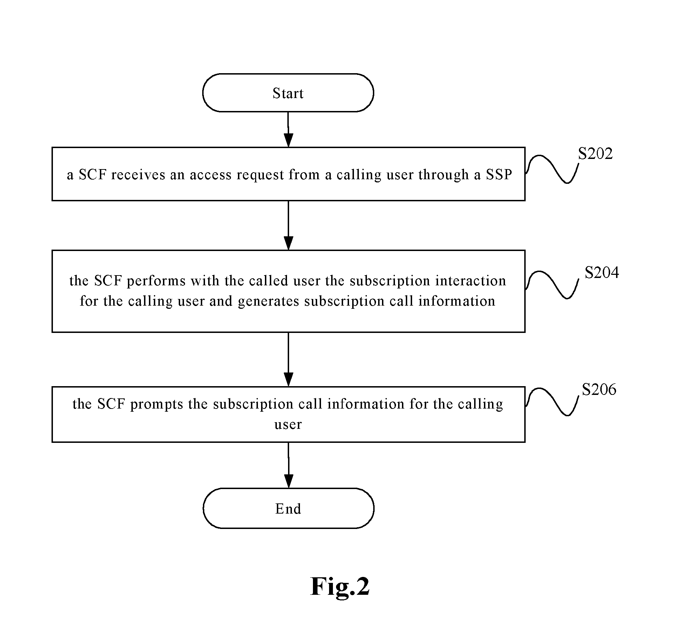

A method for subscribing a call is provided according to the embodiments of the present invention. Fig. 2 illustrates the process procedure of a method for subscribing a call according to the embodiments of the present invention. As shown in Fig. 2, this method comprises the following steps.
Step S202: a SCF receives an access request from a calling user through a SSP;
Step S204: the SCF performs with the called user the subscription interaction for the calling user and generates subscription call information; and
Step S206: the SCF prompts the subscription call information for the calling user.

In the above, after step S204, the SCF registers the subscription call information in a SDE wherein the subscription call information comprises but is not limited to the following information: identification information of the calling user, identification information of the called user, subscription call time, and subscription identifier. After Step S206, the SCF releases the connection with the calling user.

Preferably, the subscription alert server detects the subscription call information periodically, and the subscription alert server prompts the calling user equipment by a short message gateway or the SCF, when the set time is up.

Moreover, the SCF performs the subscription interaction with the called user in at least one of the following manners: a voice subscription interaction manner and a USSD subscription interaction manner

By the above embodiments, it is enabled that the called user can flexibly select the answer process manner for any calling user according to subj ective and/or obj ective situations.

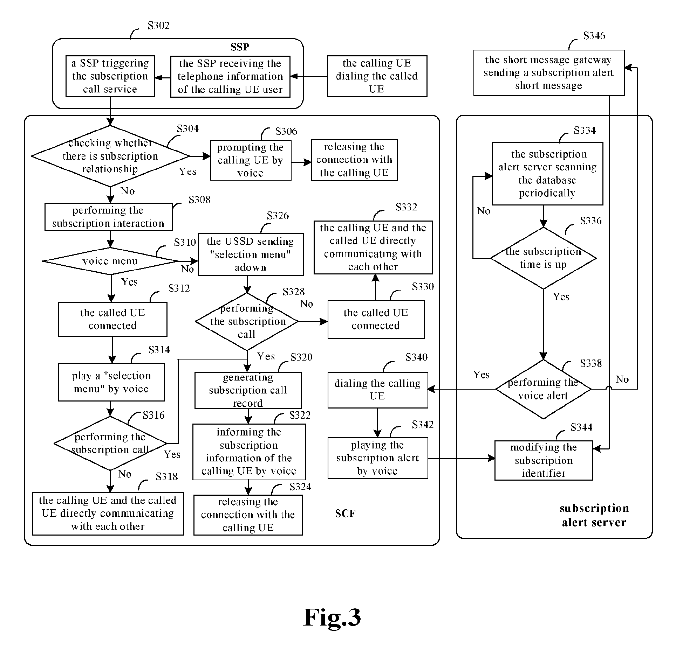

The preferred embodiments of the present invention will be described in conjunction with Fig. 3 hereinafter. Fig. 3 is a flowchart of a preferred process solution according to the method embodiments of the present invention As shown in Fig. 3, this method comprises:
Step S302: a calling user dials a called user, and a SSP triggers the SCF service logic after receiving the identification information of the calling user;
Step S304: the SCF checks whether there is a subscription relationship between the calling user and the called user, wherein if the check result is YES, it will perform Step S306; otherwise it will perform Step S308;
Step S306: if there is a subscription relationship between the callinguser and called user, the SCF prompts for the calling user the subscription call information corresponding to this subscription call relationship and then releases the connection with the calling user, wherein the prompt manner may use a voice prompt manner, for example, the prompt information can be as shown in table 1 but not limited to the contents shown in Table 1;

**Table 1**

| |
|---|
| The number 15912345678 that you are dialing is busy now, please dial again at 14:30, and we will inform youin time, thanks! |
| ...... |

Step S308: if there is no subscription relationship between the calling user and the called user, then the SCF performs the subscription interaction with the called user;

In particular, the SCF can perform the subscription interaction with the called user in the voice interaction manner or the USSD interaction manner, wherein when the calling user is a mobile terminal, the SCF can perform the subscription interaction with the called user in the voice interaction manner or the USSD interaction manner; and when the calling user is a fixed terminal, the SCF can perform the subscription interaction with the called user in the voice interaction manner
Step S310: the subscription interaction is performed in voice interaction manner
Step S312: the SCF has the called user connected.
Step S314: the SCF plays a "selection menu" by voice, wherein the "selection menu" may be learned by referring to Table 2 (but not limited thereto).

**Table 2**

| |
|---|
| Hello, you have a new incoming call 13012345678. |
| Please directly press # if answering it immediately. |
| Please press *10# if hoping it comes after 10 minutes, |
| Please press *20# ifhoping it comes 20 minutes, |
| ...... |
| Please input *10*20# ifhoping it comes at 10:20 |
| Please input *11*30# ifhoping it comes at 11:30 |
| ...... |

Step S316: if the called user selects the subscription call, then Step S320 is performed, otherwise Step S318 is performed.
Step S318: if the called user selects the direct answer, then the calling user and the called user directly communicate with each other.
Step S320: the SCF generates the subscription call information (subscription call record) by assembling the information such as the telephone number (identification information) of the calling user, the telephone number (identification information) of the called user, subscription call time, subscription identifier and the like, and registers the subscription call information in the SDF.
Step S322: the SCF informs the subscription information of the calling user by voice, wherein Table 3 (but not limited thereto) can be referred to for the informed subscription information.

**Table 3**

| |
|---|
| The number 15912345678 that you are dialing is busy now. Please dial later again at 14:30, and we will inform youin time, thanks! |
| ...... |

Step S324: the SCF releasing the connection with the calling user.
Step S326: the subscription interaction is performed in the USSD interaction manner, and the USSD issues a "selection menu", wherein the "selection menu" may be learned by referring to Table 2 (but not limited thereto).
Step S328: if the called user selects the subscription call, then Step S320 to Step S324 are performed, otherwise Step S330 is performed.
Step S330: if the called user selects the direct answer, then the SCF has the called user connected.
Step S332: the calling user and the called user directly communicates with each other.

By the above procedure, the Do Not Disturb function of the called user can be achieved, which does not require the calling user to make the setting in advance.
Step S334: the subscription alert server scans the subscription call record stored by the SDF periodically.
Step S336 to Step S346: when the subscription call time is consistent with the current time, by means of communicating with the SCF through an outbound interface or communicating with the short message gateway through a short message interface, according to the system configuration, the subscription call information is prompted for the calling user and the subscription identifier is modified, wherein the prompted subscription call information may be learned by referring to Table 4 (but not limited thereto).

**Table 4**

| |
|---|
| Hello, it is 14:30, and the number 15912345678 would like to receive a call from you...... |

In step S302, there are two manners of triggering the SCF subscription call: the called user triggering manner, and the calling user triggering manner, which will be described in the following respectively.

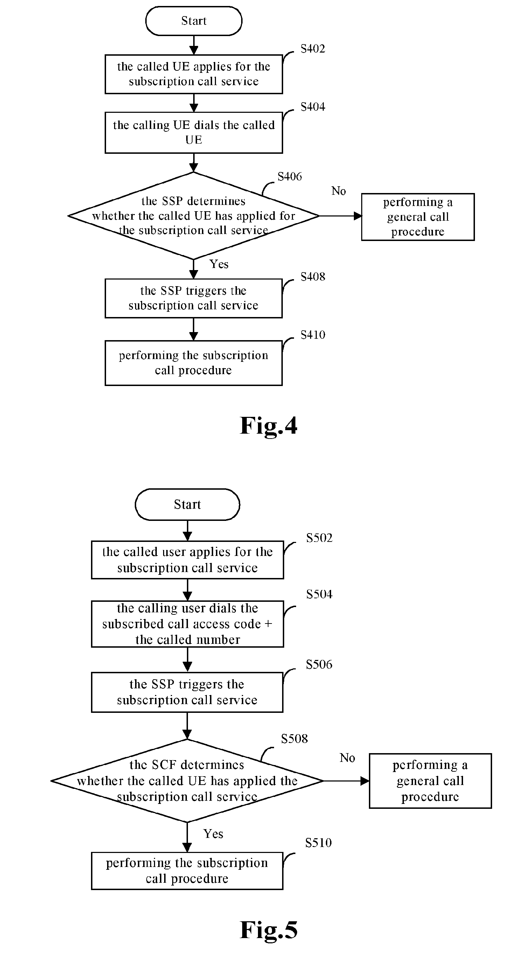

Fig. 4 is a schematic diagram of triggering manner of the called user according to the method embodiments of the present invention. As shown in Fig. 4, it comprises the following steps.
Step S402: the called user applies for the subscription call service
Step S404: the calling user dials the called user.
Step S406: the SSP determines whether the called user has applied for this subscription call service, wherein if not, it will perform a general call procedure, and if yes, then it will perform Step S408.
Step S408: the SSP triggers the subscription call service.
Step S410: the SCF performs the subscription call procedure.

Fig. 5 is a schematic diagram of triggering manner of the calling user according to the method embodiments of the present invention. When this manner is used, the calling user needs to acquire the subscription call access code of the calleduser in advance. As shown in Fig. 5, it comprises the following steps.
Step S502: the called user applies for the subscription call service
Step S504: the calling user dials the subscription call access code and the telephone number of the called user.
Step S506: the SSP triggers the subscription call service.
Step S508: the SSP determines whether the called user has applied for this subscription call service, wherein if not, then it will perform the general call procedure, and if yes, then it will perform Step S510.
Step S510: the SCF performs the subscription call procedure.

A computer readable medium is further provided according to the embodiments of the present invention. The computer readable medium stores computer executable instructions thereon. When these instructions are executed by a computer or a processor, the computer or the processor can perform the process of the steps as shown in Figs. 2 to 5. Preferably, one or more of the above embodiments can be implemented.

### Apparatus Embodiments

An apparatus for subscribing a call is further provided according to the embodiments of the present invention, which may be provided in the SCF and be used for achieving the method for subscribing a call provided by the above method embodiments.

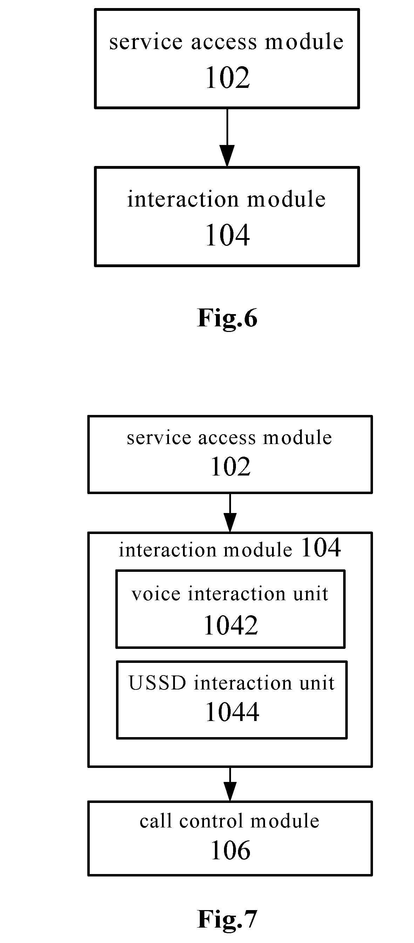

Fig. 6 is a block diagram of the structure of an apparatus for subscribing a call according to the apparatus embodiments of the present invention, and Fig. 7 is a block diagram of the preferred structure of the apparatus for subscribing a call according to the apparatus embodiments of the present invention.

As shown in Fig. 6, the apparatus for subscribing a call according to the embodiments of the present invention comprises: a service access module 102, configured to receive an access request from a calling user through a SSP; and an interaction module 104, configured to perform with the called user the subscription interaction for the calling user, to generate subscription call information and to prompt the subscription call information for the calling user.

As shown in Fig. 7, the interaction module 104 at least comprises one of the following units: a voice interaction unit 1042, configured to provide a voice interaction interface for the called user, to play a voice menu for the called user and to receive a key selection from the called user; and a USSD interaction unit 1044, configured to provide a UUSD interaction interface for the called user, to issue a USSD menu to the called user and to receive a key selection from the called user.

Preferably, the interaction module 104 registers the subscription call information in a SDF, wherein the subscription call information includes: identification information of the calling user, identification information of the called user, subscription call time, and subscription identifier.

Preferably, this apparatus further comprises: a call control module 106, configured to release the connection with the calling user after the interaction module prompting the subscription call information for the calling user, to provide interface invoking service for a subscription alert server and to prompt the subscription call information for the calling user in cooperation with the interaction module.

During practical implementation, the particular working procedure of the apparatus for subscribing a call according to the embodiments of the present invention may be learned by referring to the procedure shown in Figs. 2 to 5.

### System Embodiments

A system for subscribing a call is further provided according to the embodiments of the present invention, which can be used for achieving the method for subscribing a call provided by the above method embodiments.

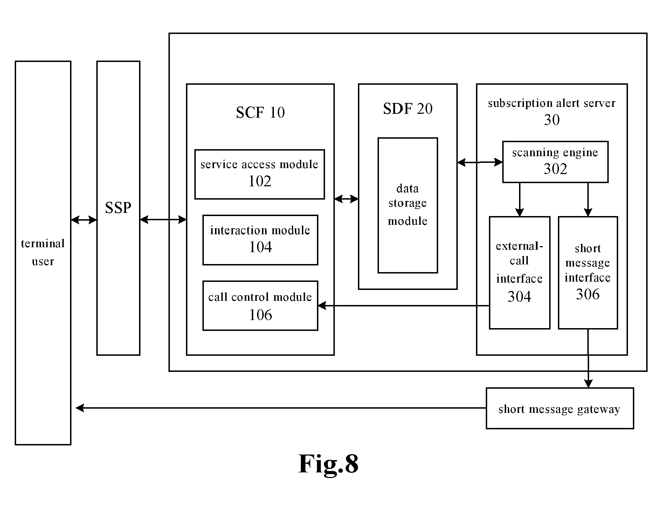

Fig. 8 is a block diagram of the structure of a system for subscribing a call according to the system embodiments of the present invention. As shown in Fig. 8, the system according to the embodiments of the present invention comprises: a SCF 10, a SDF 20, and a subscription alert server 30.

In the above, the SCF 10 is configured to receive an access request from a calling user through a SSP, to perform with a called user the subscription interaction for the calling user, to generate subscription call information and to prompt the subscription call information for the calling user; the SDF 20 is configured to store the subscription call information generated by the SCF; and the subscription alert server 30 is configured to detect the subscription call information stored by the SDF periodically and to prompt, when the set time is set, the calling user through a short message gateway or the SCF.

Preferably, the subscription alert server 30 further comprises: a scanning engine 302, and one of an external-call interface 304 and short message interface 306, wherein the scanning engine 302 is configured to monitor in real time the subscription call information stored by the SDF 20, wherein if the set time is up, the scanning engine prompts the calling user through the external-call interface 304 or short message interface 306 according to the system configuration; the external-call interface 304 is configured to play the subscription call information for the calling user through the SCF 10; and the short message interface 306 is configured to send the subscription call information to the calling user by a short message gateway.

In particular, Figs. 6 and 7 may be referred to for the structure of SCF 10.

The SDF 20, connected to the SCF 10, is configured to achieve the function of data storage module, wherein this module may be a service database configured locally and may also be for example a read only memory (ROM), a random access memory (RAM), a core memory, a disc storage medium, a flash memory apparatus, and various storage medium for storing information.

The function of the subscription alert server 30 is to alert the subscription time of the calling user, wherein when the subscription time is up, the subscription alert server 30 will automatically alert the calling user, thus the calling user may not worry about missing the call moment due to forgetting the subscription time.

During practical implementation, the particular working procedure of the system for subscribing a call according to the embodiments of the present invention may be learned by referring to the procedure shown in Figs. 2 to 5.

In summary, with the above solution provided according to the present invention, by means of performing with the called user the subscription interaction for the calling user and generating subscription call information, a simple and effective subscription call service is achieved. The technical solution of the present invention is not limited by the application environment or the application time, so it can improve user's experience.

Furthermore, the present invention is implemented without modifying the system architecture and the current process procedure, which is easy to implement and convenient to be generalized in the technical field, and has rather strong industry applicability

Above description is only to illustrate the preferred embodiments but not to limit the present invention. Various alterations and changes to the present invention are apparent to those skilled in the art. The scope defined by claims shall cover any modification, equivalent substitution and improvement within the spirit and principle of the present invention.

## Claims

1. A method for subscribing a call, applicable in the intelligent network, **characterized by** comprising:
a Service Control Function (SCF) receiving an access request from a calling user through a Signaling Switch Point (SSP);
the SCF performing with the called user subscription interaction for the calling user and generating subscription call information; and
the SCF prompting the subscription call information for the calling user.

2. The method of claim 1, **characterized in that** after the SCF generating subscription call information, the method further comprises:
the SCF registering the subscription call information in a data storage module of Service Data Function (SDF), wherein the subscription call information includes: identification information of the calling user, identification information of the called user, subscription call time, and subscription identifier; and
after the SCF prompting the subscription call information for the calling user, the method further comprises: the SCF releasing a connection with the calling user.

3. The method of claim 2, **characterized in that** the method further comprises:
a subscription alert server detecting the subscription call information periodically, and the subscription alert server prompting the calling user equipment through a short message gateway or the SCF, when the set time is up.

4. The method of any one of claims 1 to 3, **characterized in that**
the SCF performs the subscription interaction with the called user in at least one of the following manners: a voice subscription interaction manner and a subscription interaction manner of Unstructured Supplementary Service Data (USSD).

5. An apparatus for subscribing a call provided in a SCF, **characterized by** comprising:
a service access module, configured to receive an access request from a calling user through a SSP; and
an interaction module, configured to perform with the called user the subscription interaction for the calling user, to generate subscription call information and to prompt the subscription call information for the calling user.

6. The apparatus of claim 5, **characterized in that** the interaction module at least comprises one of the following units:
a voice interaction unit, configured to provide a voice interaction interface for the called user, to play a voice menu for the called user and to receive a key selection from the called user; and
a USSD interaction unit, configured to provide a UUSD interaction interface for the called user, to transmit a USSD menu to the called user and to receive a key selection from the called user.

7. The apparatus of claim 5, **characterized in that**
the interaction module is configured to register the subscription call information in a data storage module of Service Data Function (SDF), wherein the subscription call information includes: identification information of the calling user, identification information of the called user, subscription call time, and subscription identifier

8. The apparatus of claim 5, **characterized in that** the apparatus further comprises:
a call control module, configured to release the connection with the calling user after the interaction module prompting the subscription call information for the calling user, to provide interface invoking service for a subscription alert server and to prompting the subscription call information for the calling user in cooperation with the interaction module.

9. A system for subscribing a call, **characterized by** comprising:
a SCF, configured to receive an access request from a calling user through a SSP, to perform with the called user the subscription interaction for the calling user, to generate subscription call information and to prompting the subscription call information for the calling user;
a SDF, configured to store the subscription call information generated by the SCF; and
a subscription alert server, configured to detect periodically the subscription call information stored by the SDF and to prompt the calling user by a short message gateway or the SCF, when the set time is up.

10. The system of claim 9, **characterized in that** the subscription alert server further comprises: a scanning engine, and one of an external-call interface and a short message interface, wherein
the scanning engine is configured to monitor in real time the subscription call information stored by the SDF, and if the set time is up, then the scanning engine prompts the calling user by the external-call interface or the short message interface according to the system configuration;
an external-call interface is configured to play the subscription call information for the calling user through the SCF; and
a short message interface is configured to send the subscription call information to the calling user by a short message gateway.
